# EUROPÄISCHE PATENTSCHRIFT

(11) **EP 4 470 867 B1**
(45) Veröffentlichungstag und Bekanntmachung des Hinweises auf die Patenterteilung: **08.07.2026**
(21) Anmeldenummer: 24178588.0
(22) Anmeldetag: 28.05.2024
(51) Int. Cl.: B61B 1/00, B61B 12/02

(54) **PARKSPEICHER FÜR SEILBAHNFAHRZEUG**
PARKING STORAGE FOR A FUNICULAR VEHICLE
ACCUMULATEUR DE STATIONNEMENT POUR VÉHICULE DE TÉLÉPHÉRIQUE

(30) Priorität: 31.05.2023 AT 504272023
(43) Veröffentlichungstag der Anmeldung: 04.12.2024
(73) Patentinhaber: Innova Patent GmbH, 6922 Wolfurt (AT)
(72) Erfinder: Aichholzer, Tobias, 6842 Koblach (AT)
(74) Vertreter: Weiss Patentanwalts GmbH

(56) Entgegenhaltungen:
- EP-A2- 2 551 164
- EP-B1- 2 370 300
- JP-A- H09 150 733
- US-A- 4 785 738

## Beschreibung

Die gegenständliche Erfindung betrifft einen Parkspeicher für Seilbahnfahrzeuge mit einem mäanderförmigen Parkgleis zur Aufnahme von Seilbahnfahrzeugen, wobei das Parkgleis zumindest einen erste Parkgleislängsabschnitt und einen zweiten Parkgleislängsabschnitt aufweist, die beabstandet voneinander angeordnet sind, und die erste und zweiten Parkgleislängsabschnitte über einen ersten Parkgleisbogenabschnitt miteinander verbunden sind, wobei die Seilbahnfahrzeug mit einem Parkförderer in einer Förderrichtung entlang des Parkgleises bewegbar sind, wobei im Parkspeicher ein Stetigförderer des Parkförderers mit einem im Betrieb des Parkspeichers in Förderrichtung mit einer vorgegebenen Stetigfördergeschwindigkeit umlaufenden Zugmittel vorgesehen ist, und am Zugmittel eine Mehrzahl von Mittnehmern angeordnet ist und der Stetigförderer eingerichtet ist, im Betrieb des Parkspeichers mit einem Mitnehmer das Seilbahnfahrzeug in Förderrichtung mit der Stetigfördergeschwindigkeit entlang des ersten und zweiten Parkgleislängsabschnittes zu bewegen. Die Erfindung betrifft ferner ein Verfahren zum Speichern eines Seilbahnfahrzeugs in einem Parkspeicher.

Umlaufseilbahnen weisen in der Regel eine Anzahl von Seilbahnstationen, eine Anzahl von Seilbahnfahrzeugen sowie ein Förderseil zur Bewegung der Seilbahnfahrzeuge zwischen den Seilbahnstationen auf. Das Förderseil läuft zwischen den Seilbahnstation um, beispielsweise an Seilscheiben in den Seilbahnstationen, wobei zumindest eine Seilscheibe angetrieben ist. Es sind auch Umlaufseilbahnen bekannt, bei welchen die Seilbahnfahrzeuge in einer Seilbahnstation vom Förderseil abgekoppelt werden, um im abkoppelten Zustand und unabhängig vom Förderseil durch die Seilbahnstation bewegt zu werden. Vor der Ausfahrt aus der Seilbahnstation werden die Seilbahnfahrzeuge wieder auf die Geschwindigkeit des Förderseils beschleunigt und mit dem Förderseil gekoppelt. Dadurch kann einerseits eine hohe Förderleistung aufgrund hoher Fördergeschwindigkeit des Förderseils erreicht werden und andererseits kann die Geschwindigkeit der Seilbahnfahrzeuge innerhalb der Seilbahnstation verringert werden, wodurch das Ein- und Aussteigen von Passagieren bzw. allgemein das Be- und Entladen der Seilbahnfahrzeuge erleichtert wird. In der Regel ist dazu innerhalb der Seilbahnstation zumindest eine Führungsschiene vorgesehen, entlang der die Seilbahnfahrzeuge im vom Förderseil entkoppelten Zustand durch die Seilbahnstation geführt werden. An den Seilbahnfahrzeugen, beispielsweise am Gehänge, sind meist Rollen angeordnet, mit welchen die Seilbahnfahrzeuge auf der Führungsschiene abrollen. Zum Fördern der abgekoppelten Seilbahnfahrzeuge in einer Seilbahnstation ist ein Stationsförderer vorgesehen. Der Stationsförderer kann als bekannter Reifenförderer ausgeführt sein, bei dem in der Seilbahnstation entlang der Führungsschiene angeordnete angetriebene Reifen mit einem Reibbelag an den Seilbahnfahrzeuge zusammenwirken. Der Reibbelag kann dabei z.B. am Gehänge des Seilbahnfahrzeugs angeordnet sein. Der Stationsförderer kann aber auch anders ausgeführt sein, beispielsweise als mechanischer Stetigförderer mit einem Zugmittel (beispielsweise ein Band oder Kette), auf dem Mitnehmer vorgesehen sind, die mit einem Teil eines Seilbahnfahrzeugs zusammenwirken, um dieses mit der Geschwindigkeit des Zugmittels zu bewegen. Alle Seilbahnfahrzeuge am Zugmittel werden damit mit derselben Geschwindigkeit des Zugmittels bewegt.

Solche Umlaufseilbahnen mit vom Förderseil abkoppelbaren Seilbahnfahrzeugen weisen oftmals auch einen Parkspeicher auf, in welchem die vom Förderseil abkoppelten Seilbahnfahrzeuge außerhalb der Betriebszeiten der Umlaufseilbahn geparkt werden können. Dadurch kann beispielsweise eine Wartung am Förderseil oder an den Seilbahnfahrzeugen durchgeführt werden und die Seilbahnfahrzeuge können vor Witterungseinflüssen wie z.B. Schnee, Eis, Sturm, etc. geschützt werden. Auch kann eine Anzahl von Seilbahnfahrzeuge im Parkspeicher auf während des Betriebs der Umlaufseilbahn abgestellt werden, beispielsweise während Zeiten mit geringem Förderbedarf. Ein solcher Parkspeicher befindet sich üblicherweise innerhalb oder im Bereich einer der Seilbahnstationen, beispielsweise auf gleicher Ebene wie der Betriebsbereich, in dem sich der Einstiegs- und/oder Ausstiegsbereich für die Passagiere befindet oder auch in einer Garage unterhalb des Betriebsbereichs. Um die Seilbahnfahrzeuge in ihre vorgesehenen Parkpositionen im Parkspeicher überzuführen ist in der Regel ein Parkförderer vorgesehen, der eine oder mehrere Fördereinrichtungen umfassen kann. Der Parkförderer ist in der Regel mit dem Stationsförderer verbunden, um Seilbahnfahrzeuge vom Stationsförderer auf den Parkförderer überzuführen, oder umgekehrt. Hierfür können auch Weichen vorgesehen sein, um Seilbahnfahrzeuge vom Stationsförderer auf den Parkförderer zu bewegen, oder umgekehrt. Beispielhafte Parkförderer sind aus EP 711 696 A1 oder AT 392 766 B bekannt.

EP 2 551 164 A2 beschreibt die Verwendung der Seilbahnstation selbst als Parkspeicher, wobei der in der Station für den Umlauf der Seilbahnfahrzeuge vorgesehene Reifenförderer gleichzeitig auch als Parkförderer verwendet wird.

Die Bewegung der Seilbahnfahrzeuge im Parkspeicher erfolgt oftmals auf sogenannten Gefällegleisen als Parkförderer, oder Teil eines Parkförderers. Ein Gefällegleise ist im Wesentlichen analog wie die Führungsschiene der Seilbahnstation ausgebildet, weist allerdings ein bestimmtes festgelegtes Gefälle auf. Die Bewegung der Seilbahnfahrzeuge entlang des Gefällegleises in die Parkposition erfolgt dabei nur durch die Schwerkraft aufgrund des definierten Gefälles, ohne externen Antrieb. Das Gefällegleis kann beispielsweise über eine Weiche mit der Führungsschiene der Seilbahnstation verbunden sein, sodass die Seilbahnfahrzeuge zum Parken über die Weiche aus der Führungsschiene auf das Gefällegleis ausgeschleust werden können. Der Rücktransport der Seilbahnfahrzeuge aus dem Parkspeicher in den Betriebsbereich kann beispielsweise mit einem Reifenförderer ähnlich wie der Antrieb der Seilbahnfahrzeuge entlang der Führungsschiene im Betriebsbereich der Seilbahnstation erfolgen. Ein Gefällegleis hat aber eine Reihe von Nachteilen. Zum einen ist ein Gefällegleis störanfällig, denn ein zu geringes Gefälle des Gefällegleises und/oder Unebenheiten, Fremdkörper, Schmutz, Eis etc. am Gefällegleis oder an den Seilbahnfahrzeugen können zu einer unbeabsichtigten Bewegung des Seilbahnfahrzeugs, wie einem unerwünschten Stoppen, eine zu langesame oder zu schnelle Bewegung usw., oder zum Blockieren der Seilbahnfahrzeuge führen. Andererseits kann ein zu großes Gefälle dazu führen, dass die Seilbahnfahrzeuge mit zu hoher Geschwindigkeit aufeinanderprallen, was zu Beschädigungen an den Seilbahnfahrzeugen führen kann. Zudem ist der bauliche Aufwand der Seilbahnstation aufgrund des erforderlichen Niveauunterschiedes für das Gefällegleis relativ hoch und auch die Montage des Gefällegleises ist relativ aufwändig, weil aus den oben genannten Gründen eine möglichst genaue Einstellung des Gefälles notwendig ist.

In einem Parkspeicher sind auch oftmals parallel zueinander angeordnete Parkgleise vorgesehen, die über ein Zubringergleis, das die Parkgleise miteinander verbindet, bestückt werden. Ein Beispiel hierfür ist in WO 2010/082125 A1 oder AT 392 766 B beschrieben. Der Nachteil solcher Parkspeichere ist darin zu sehen, dass man für jedes Parkgleis eine Weiche benötigt, um ein Seilbahnfahrzeug vom Zubringergleis auf das Parkgleis umzulenken, oder umgekehrt, was den Aufwand erhöht.

In AT 392 766 B ist am Zubringergleis als Parkförderer ein Stetigförderer vorgesehen und die Seilbahnfahrzeuge werden auf den Parkgleisen von selbstangetriebenen Seilbahnfahrzeugaufnahmen bewegt. Diese Ausführung ist aber sehr aufwendig, weil es für jedes Seilbahnfahrzeug eine Seilbahnfahrzeugaufnahme mit eigenem Antrieb geben muss.

In WO 2010/082125 A1 ist am Zubringergleis ein Reifenförderer vorgesehen und am Parkgleis ein Stetigförderer, wobei der Stetigförderer durch die Bewegung der Seilbahnfahrzeug am Reifenförderer angetrieben wird. Hierzu überlappen der Reifenförderer und der Stetigförderer ein Stück. Ein solcher Parkförderer ist aber anfällig für Störungen. Aufgrund von Schlupffehlern im Reifenförderer und aufgrund von Abstandsfehlern der Seilbahnfahrzeug am Reifenförderer, kann es leicht zu einer Unterbrechung des Antriebs des Steigförderers der Parkgleise kommen.

Um den Nachteil in einer Ausführung eines Parkspeichers mit Zubringergleis und Parkgleisen zu beheben, ist es auch schon bekannt, im Parkspeicher ein durchgehendes Parkgleis vorzusehen. Das Parkgleis ist dabei mäanderförmig ausgeführt und die Seilbahnfahrzeuge werden am mäanderförmigen Parkgleis hintereinander aufgereiht. Aus Platzgründen sollen die Seilbahnfahrzeuge am Parkgleis natürlich so nahe aneinander liegen wie möglich. Um Platz zu sparen, sind die einzelnen Äste des mäanderförmigen Parkgleises auch möglichst nahe aneinander angeordnet. Die mäanderförmige Anordnung des Parkgleises bedingt aber zwischen benachbarten parallelen Ästen des Parkgleises bogenförmige Verbindungen mit kleinen Radien. Auf Umlaufseilbahnen kommen oftmals Seilbahnfahrzeuge mit großen Breiten (quer zur Förderrichtung) zum Einsatz, um die Förderkapazität zu erhöhen. Ein Seilbahnfahrzeug lenkt aber auf einem bogenförmigen Abschnitt aus, weshalb hintereinanderfahrende Seilbahnfahrzeuge in einem bogenförmigen Abschnitt einen bestimmen Abstand in Förderrichtung benötigen, um Kollisionen zu vermeiden. Das würde wiederum einen großen Abstand zwischen benachbarten Seilbahnfahrzeugen am Parkgleis bedingen, insbesondere bei Seilbahnfahrzeugen mit großer Breite, was aber wiederum den Platzbedarf für den Parkspeicher nachteilig beträchtlich erhöhen würde. Um dieses Problem zu beheben, schlägt die US 4,785,738 A vor, auf einem mäanderförmigen Parkgleis die Seilbahnfahrzeuge in einem zwei gerade Abschnitte verbindenden bogenförmigen Abschnitt mit größerem Abstand, dafür aber schneller als am geraden Abschnitt zu bewegen.

Es besteht daher Bedarf für einen möglichst platzsparenden Parkspeicher für Seilbahnfahrzeuge einer Umlaufseilbahn mit einem mäanderförmigen Parkgleis und einem Parkförderer und für ein entsprechendes Verfahren zum Speichern eines Seilbahnfahrzeugs in einem solchen Parkspeicher.

Ein solcher Parkspeicher, und ein entsprechendes Verfahren, wird mit den Merkmalen von Anspruch 1 und 7 erzielt.

Die erfindungsgemäße Ausführung des Parkspeichers, insbesondere des Parkförderers des Parkspeichers, ermöglicht es, Seilbahnfahrzeug auf den Parkgleislängsabschnitte mit sehr knappem Abstand hintereinander zu bewegen, wodurch Platz gespart werden kann. Um trotz dieser knappen Abstände eine Kollision der Seilbahnfahrzeuge auf dem Parkgleisbogenabschnitt zu vermeiden, werden die Seilbahnfahrzeuge am Übergang zum Parkgleisbogenabschnitt beschleunigt, um den Abstand zu vergrößern. Nach der Durchfahrt durch den Parkgleisbogenabschnitt werden die Seilbahnfahrzeuge wieder verzögert, um den Abstand wieder zu verkleinern, sodass die Seilbahnfahrzeuge am folgenden Parkgleislängsabschnitt wieder mit engem Abstand weiterbewegt werden können.

Besonders vorteilhaft ist es, wenn für den ersten Parkgleislängsabschnitt und den zweiten Parkgleislängsabschnitt ein Stetigförderer mit demselben Zugmittel für den ersten Parkgleislängsabschnitt und den zweiten Parkgleislängsabschnitt, und gegebenenfalls auch für weitere Parkgleislängsabschnitte, vorgesehen ist. Damit kann die Ausführung des Parkförderers vereinfacht werden, weil nur ein durchgehendes Zugmittel, und damit auch nur ein Antrieb für das Zugmittel, benötigt wird.

Ein besonders sanfter Übergang vom Parkgleisbogenabschnitt auf einen Parkgleislängsabschnitt lässt sich erreichen, wenn zumindest ein Reifen des Reifenförderers im zweiten Überlappungsbereich, bevorzugt im Bereich des Endes oder am Ende des zweiten Überlappungsbereichs, über eine Rutschkupplung angetrieben ist und/oder zumindest ein Reifen des Reifenförderers im ersten Überlappungsbereich, bevorzugt im Bereich des Beginns oder am Beginn des ersten Überlappungsbereichs, über eine Rutschkupplung angetrieben ist.

In einer vorteilhaften einfachen Ausführung ist der Mitnehmer U-förmig mit zwei abstehenden Schenkeln ausgeführt, wodurch zwischen den Schenkeln in einer Mitnahmestellung ein Eingriffsbereich ausgebildet ist, in dem im Betrieb des Parkspeichers ein Teil des Seilbahnfahrzeugs zu liegen kommt, um den Mitnehmer in Eingriff mit dem Seilbahnfahrzeug zu bringen. Das ermöglicht einen einfachen Eingriff zwischen Mitnehmer und Seilbahnfahrzeug.

Das Eingreifen oder das Lösen des Eingriffs kann besonders sanft ausgeführt werden, wenn am freien axialen Ende zumindest eines abstehenden Schenkels eine Rolle drehbar gelagert angeordnet ist.

Wenn zumindest ein abstehender Schenkel des Mitnehmers an einem dem axialen freien Ende gegenüberliegenden axialen Ende des Schenkels drehbar gelagert angeordnet ist, wobei am Mitnehmer ein Federelement vorgesehen ist, das den drehbar gelagerten Schenkel in der Mitnahmestellung drückt, lässt sich der Eingriff sehr einfach realisieren, weil das Seilbahnfahrzeug den Schenkel durch die eigene Bewegung umklappt und nach dem Einfahren eines Teils des Seilbahnfahrzeugs zwischen die Schenkel, sich der umgeklappte Schenkel wieder aufrichtet und das Seilbahnfahrzeug mitnimmt.

Die gegenständliche Erfindung wird nachfolgend unter Bezugnahme auf die Figuren 1 bis 5 näher erläutert, die beispielhaft, schematisch und nicht einschränkend vorteilhafte Ausgestaltungen der Erfindung zeigen. Dabei zeigt
Fig.1 eine Seilbahnstation mit einem Parkspeicher,
Fig.2 ein Gehänge eines Seilbahnfahrzeugs,
Fig.3 ein erfindungsgemäße Parkgleis mit Parkförderer,
Fig.4 eine Ausführung eines Mitnehmers und Stetigförderers und
Fig.5 das Auslenken eines Seilbahnfahrzeugs in einem Parkgleisbogenabschnitt.

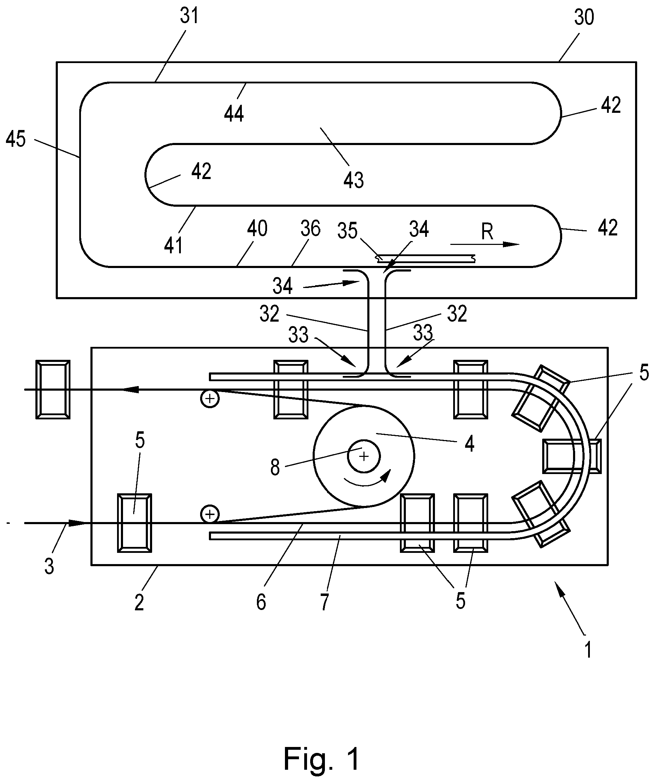

Fig.1 zeigt sehr schematisch eine Seilbahnstation 2 einer Umlaufseilbahn 1. Die Umlaufseilbahn weist in der Regel eine zweite Seilbahnstation auf, die in Fig.1 nicht dargestellt ist. Zwischen den Seilbahnstationen 2 läuft ein Förderseil 3 um, beispielsweise an Seilscheiben 4 in den Seilbahnstationen 2, wobei zumindest eine Seilscheibe 4 durch einen Seilbahnantrieb 8 angetrieben ist. Am Förderseil 3 werden Seilbahnfahrzeuge 5, wie Gondeln oder Sessel, zwischen den Seilbahnstationen 2 befördert. In einer Seilbahnstation 2 werden die Seilbahnfahrzeuge 5 nach der Einfahrt in die Seilbahnstation 2 in bekannter Weise vom Förderseil 3 abgekoppelt. Vor der Ausfahrt aus der Seilbahnstation 2 werden die Seilbahnfahrzeuge 5 wieder mit dem Förderseil 3 gekoppelt. Zum Abkoppeln und Koppeln dienen Seilklemmen 23 an den Seilbahnfahrzeugen 5. In der Seilbahnstation 2 ist zumindest eine Führungsschiene 6 vorgesehen, entlang der die Seilbahnfahrzeuge 5 in der Seilbahnstation 2 geführt werden. Zur Bewegung eines vom Förderseil 3 abgekoppelten Seilbahnfahrzeuges 5 in der Seilbahnstation 2 entlang der Führungsschiene 6 ist ein Stationsförderer 7, beispielsweise ein Reifenförderer oder ein Stetigförderer, vorgesehen.

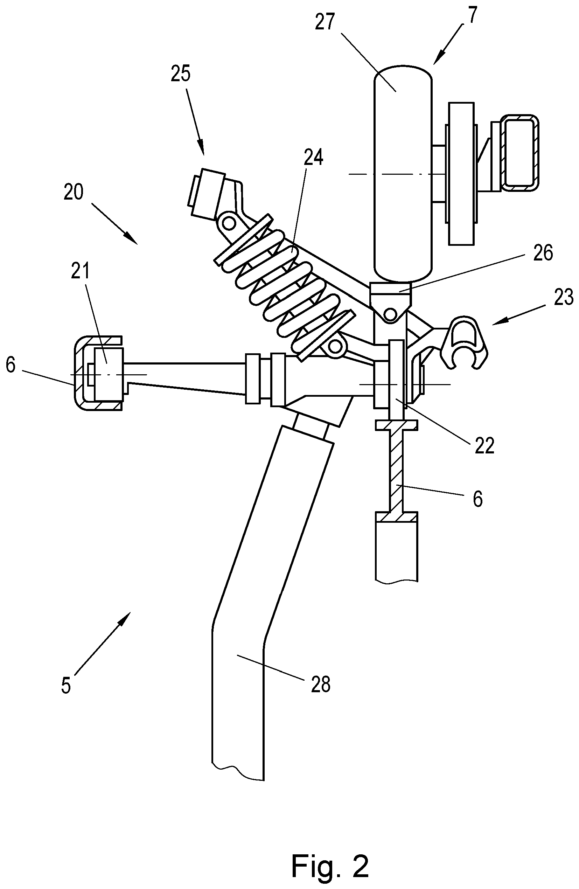

Fig.2 zeigt beispielhaft ein Gehänge 20 eines Seilbahnfahrzeuges 5, mit dem das Seilbahnfahrzeug 5 auf der Strecke am Förderseil 3 hängt und in der Seilbahnstation 2 entlang Führungsschienen 6 bewegt wird. Das Gehänge 20 ist in bekannter Weise mit zumindest einer Gehängestange 28 mit einem Beförderungsmittel (nicht dargestellt) des Seilbahnfahrzeuges 5, wie eine Kabine oder ein Sessel, verbunden. Am Gehänge 20 ist eine Seilklemme 23 angeordnet, die das Förderseil 3 unter Wirkung einer Klemmenfeder 24 klemmen kann, und die über eine Klemmenbetätigung 25 zum Öffnen mechanisch betätigt werden kann. Am Gehänge 20 ist auch zumindest eine Führungsrolle 21, 22 angeordnet, die in der Seilbahnstation 2 mit zumindest einer Führungsschiene 6 zusammenwirkt, um das Seilbahnfahrzeug 5 in der Seilbahnstation 2 entlang der zumindest einen Führungsschiene 6 zu führen. Der Stationsförderer 7 ist in diesem Ausführungsbeispiel als Reifenförderer ausgeführt, bei dem eine Mehrzahl von angetriebenen Reifen 27 in der Seilbahnstation 2 in Förderrichtung hintereinander drehbar gelagert angeordnet sind. Die Reifen 27 wirken mit einem Reibbelag 26 am Gehänge 20 zusammen, um das vom Förderseil 3 abgekoppelte Seilbahnfahrzeug 5 durch die Drehung der Reifen 27 entlang der Führungsschiene 6 durch die Seilbahnstation 2 zu bewegen.

An der Umlaufseilbahn 1 ist auch ein Parkspeicher 30 für Seilbahnfahrzeuge 5 vorgesehen, in dem Seilbahnfahrzeuge 5 aufgenommen werden können. Der Parkspeicher 30 umfasst ein mäanderförmiges Parkgleis 31 zur Aufnahme von Seilbahnfahrzeugen 5.

Um in der Seilbahnstation 2 bewegte Seilbahnfahrzeuge 5 in den Parkspeicher 30 überzuführen, kann ein Zubringergleis 32 vorgesehen sein, wie in Fig.2 dargestellt. Das Zubringergleis 32 ist an einem Ende über eine Stationsweiche 33 mit dem Stationsförderer 7 verbunden und am gegenüberliegenden Ende mit einer Parkweiche 34 mit dem Parkgleis 31. Über die Stellung der Stationsweiche 33 kann ein Seilbahnfahrzeug 5 vom Stationsförderer 7 auf das Zubringergleis 32 und weiter auf das Parkgleis 31 umgelenkt werden. Über die Parkweiche 34 kann bedarfsweise ein Seilbahnfahrzeug 5 vom Parkgleis 31 auf das Zubringergleis 32 und weiter zum Stationsförderer 7 umgelenkt werden. Anstelle eines separaten Zubringergleises 32 könnte aber auch das Parkgleis 31 über die Stationsweiche 32 direkt mit dem Stationsförderer 7 verbunden sein, womit eine Parkweiche 34 auch entfallen könnte. Zur Bewegung eines Seilbahnfahrzeuges 5 entlang des Parkgleises 31 ist ein Parkförderer 35 vorgesehen, der in Fig.1 nur für einen kurzen Abschnitt in Förderrichtung R angedeutet ist, sich aber natürlich entlang des gesamten, von Seilbahnfahrzeugen 5 befahrenen Teils des Parkgleises 31 erstreckt.

Im Ausführungsbeispiel nach Fig.1 ist ein zweites Zubringergleis 32 vorgesehen, das wiederum mit einer Stationsweiche 33 mit dem Stationsförderer 7 und mit einer Parkweiche 34 mit dem Parkgleis 31 verbunden ist. Auch das zweite Zubringergleis 32 könnte entfallen, wenn das Parkgleis 31 über die Stationsweiche 33 direkt mit dem Stationsförderer 7 verbunden wird.

Die Verwendung von zwei Zubringergleisen 32, oder zwei mit dem Parkgleis 31 verbundenen Stationsweichen 33, hat den Vorteil, dass das Beladen und das Entladen auf unterschiedlichen Wegen erfolgen kann und die Seilbahnfahrzeuge 5 nur in einer Richtung bewegt werden müssen.

Für die Erfindung ist es allerdings nebensächlich, wie das Parkgleis 31 mit dem Stationsförderer 7 in der Seilbahnstation 2 verbunden ist, weil sich die Erfindung auf die Ausführung des Parkspeichers 30, insbesondere auf die Ausführung des Parkförderer 35, bezieht.

Das erfindungsgemäße Parkgleis 31 des Parkspeichers 30 hat zumindest einen ersten Parkgleislängsabschnitt 40 und zumindest einen zweiten Parkgleislängsabschnitt 41, die quer zu Förderrichtung R beabstandet voneinander nebeneinander angeordnet sind. Zur Ausbildung eines mäanderförmigen Parkgleises 31 sind der erste Parkgleislängsabschnitt 40 und der zweite Parkgleislängsabschnitt 41 über einen ersten Parkgleisbogenabschnitt 42 miteinander verbunden. Ein Parkgleislängsabschnitt 40, 41 ist ein im Wesentlichen gerader Abschnitt des Parkgleises 31. Vorzugsweise sind der erste Parkgleislängsabschnitt 40 und der zweite Parkgleislängsabschnitt 41 zumindest abschnittsweise parallel zueinander. Der erste Parkgleisbogenabschnitt 42 kann kreisbogenförmig ausgeführt sein, kann aber auch einen anderen Bogenverlauf aufweisen.

Im Ausführungsbeispiel nach Fig.1 sind mehr als zwei Parkgleislängsabschnitte 40, 41, 43, 44, konkret vier Parkgleislängsabschnitte, quer zu Förderrichtung R nebeneinander und beabstandet voneinander vorgesehen, wobei jeweils zwei benachbarte Parkgleislängsabschnitte 40, 41, 43, 44 abwechselnd an unterschiedlichen Enden der Parkgleislängsabschnitte 40, 41, 43, 44 über einen Parkgleisbogenabschnitt 42 miteinander verbunden sind, um ein durchgehendes mäanderförmiges Parkgleis 31 zu realisieren. Die einzelnen Parkgleisbogenabschnitte 42 müssen aber nicht zwingend gleich ausgeführt sein. Um ein geschlossenes Parkgleis 31 zu realisieren, können die beiden äußeren Parkgleislängsabschnitte 40, 44 über einen weiteren Parkgleisbogenabschnitt 45 miteinander verbunden sein. Es kann aber auch vorgesehen sein, dass der erste Parkgleislängsabschnitt 40 mit einem Zubringergleis 32 oder direkt mit dem Stationsförderer 7 verbunden ist und dass der letzte Parkgleislängsabschnitt 40 mit einem weiteren Zubringergleis 32 oder direkt mit dem Stationsförderer 7 verbunden ist.

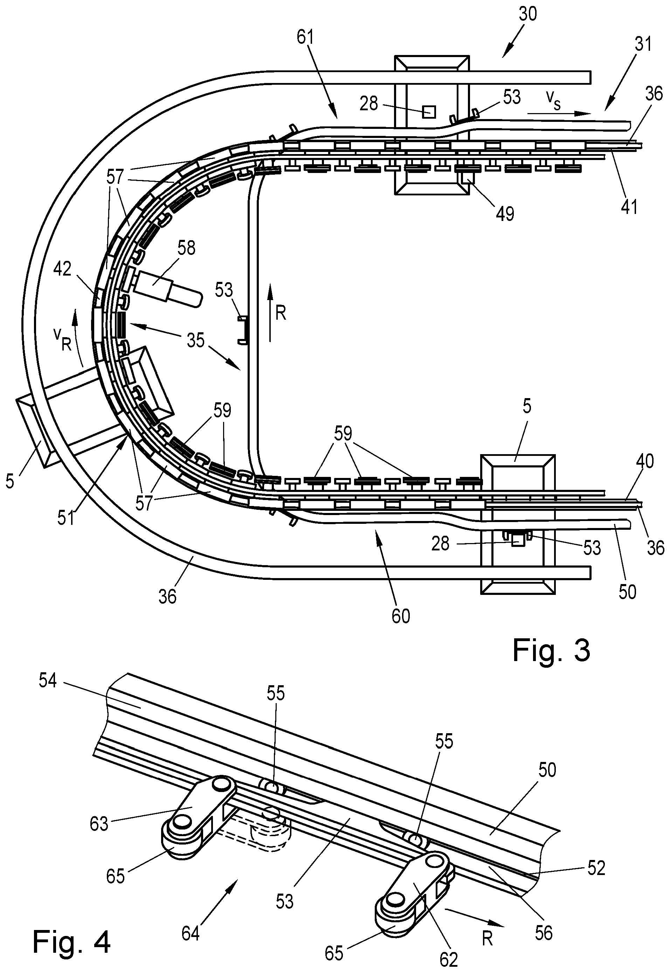

Mit Bezugnahme auf Fig.3 und 4 wird der erfindungsgemäße Parkförderer 35 des Parkspeichers 30 mit einem Parkgleis 31 beschrieben. Dargestellt ist ein Teil eines ersten Parkgleislängsabschnittes 40 und ein Teil eines zweiten Parkgleislängsabschnittes 41, die durch einen ersten Parkgleisbogenabschnitt 42 miteinander verbunden sind.

Im Parkspeicher 30 ist ein Parkförderer 35 vorgesehen, um ein Seilbahnfahrzeug 5 entlang des Parkgleises 31 zu bewegen. Der Parkförderer 35 umfasst einen Stetigförderer 50 und einen Reifenförderer 51.

Der eine Stetigförderer 50 umfasst zumindest ein Zugmittel 52 (Fig.3), das im Betrieb des Parkspeichers 30 in einer Förderrichtung R mit einer vorgegebenen Stetigfördergeschwindigkeit v_{S} umläuft. Am Zugmittel 52 sind eine Mehrzahl von Mittnehmern 53 angeordnet, die mit dem Zugmittel 52 mit der Stetigfördergeschwindigkeit v_{S} mitbewegt werden. Ein Mitnehmer 53 wirkt mit einem Teil des Seilbahnfahrzeuges 5, beispielsweise mit der Gehängestange 28 wie in Fig.3, zusammen, um das Seilbahnfahrzeug 5 zu bewegen. Hierzu kann der Mitnehmer 53 einfach an einem Teil des Seilbahnfahrzeuges 5 anliegen, oder anderweitig mit einem Teil des Seilbahnfahrzeuges 5 verbunden sein. Der Stetigförderer 50 ist eingerichtet, im Betrieb des Parkspeichers 30 mit den Mitnehmern 53 ein Seilbahnfahrzeug 5 in Förderrichtung R mit einer Stetigfördergeschwindigkeit v_{S} entlang der Parkgleislängsabschnitte 40, 41 zu bewegen.

In der Ausführung nach Fig.3 und 4 ist das Zugmittel 52 in einem einseitigen offenen Zugmittelgehäuse 54 angeordnet. Am Zugmittel 52, oder am Mitnehmer 53 des Zugmittels 52, sind drehbar gelagerte Zugmittelrollen 55 angeordnet, die an einer Rollfläche 56 des Zugmittelgehäuses 54 abrollen. Eine solche Ausführung des Stetigförderers 50 ist aber keineswegs zwingend. Der Stetigförderer 50 kann auch ein Förderband oder eine Förderkette als Zugmittel 52 aufweisen, die an Förderscheiben umlaufen und an denen Mitnehmer 53 angeordnet sind.

Der Stetigförderer 50 in der Ausführung nach Fig.3 ist im Bereich des ersten Parkgleislängsabschnittes 40 und im Bereich des zweiten Parkgleislängsabschnittes 41 angeordnet, um ein Seilbahnfahrzeug 5 entlang dieser Abschnitte zu bewegen. In einer solchen Ausführung ist auch der Stetigförderer 50 mäanderförmig angeordnet. Es könnte aber auch ein Stetigförderer 50 mit separaten Zugmittel 52 für den ersten Parkgleislängsabschnitt 40 und den zweiten Parkgleislängsabschnitt 40, und auch für weitere Parkgleislängsabschnitte 43, 43, vorgesehen sein. Ebenso ist es möglich, dass ein Stetigförderer 50 mit demselben Zugmittel 52 gleichzeitig im Bereich von mehr als zwei Parkgleislängsabschnitten 40, 41, 43, 44, auch im Bereich aller Parkgleislängsabschnitte 40, 41, 43, 44, angeordnet ist. In einer solchen Ausführung wäre auch der Stetigförderer 50 mäanderförmig entlang der zugeordneten Parkgleislängsabschnitte 40, 41, 43, 44 angeordnet.

In der Ausführung nach Fig.3 könnte der Stetigförderer 50 daher am gegenüberliegenden Ende der Parkgleislängsabschnitte 40, 41 in Richtung eines weiteren quer zur Förderrichtung R benachbarten Parkgleislängsabschnitt 43 verlaufen, sodass das Zugmittel 52 des Steigförderer 50 ein Seilbahnfahrzeug 5 auch auf diesem weiteren Parkgleislängsabschnitt 43 bewegt. Auf dem ersten Parkgleislängsabschnitt 41 und dem weiteren Parkgleislängsabschnitt 43 würden die Seilbahnfahrzeuge 5 in gleicher Richtung bewegt werden, in Parkgleislängsabschnitt 41 dazwischen, in entgegengesetzter Richtung. Das kann für eine beliebige Anzahl von Parkgleislängsabschnitten vorgesehen sein.

Durch das mäanderförmige Parkgleis 31 sind die Förderrichtungen R auf zwei benachbarten Parkgleislängsabschnitt 40, 41 entgegengesetzt. Dieser Umstand kann vorteilhaft ausgenutzt werden, indem ein Stetigförderer 50 mit einem einzigen Zugmittel 52 für beide, oder auch für mehr als zwei, Parkgleislängsabschnitte 40, 41, verwendet wird, wie in der Ausführung nach Fig.3. Das umlaufende Zugmittel 52 des Stetigförderers 50 bewegt sich dann entlang der beiden, oder auch entlang von mehr als zwei, Parkgleislängsabschnitten 40, 41 abwechselnd in entgegengesetzte Richtungen. Die Seilbahnfahrzeuge 5 werden auf den beiden, oder auch auf mehr als zwei, Parkgleislängsabschnitten 40, 41 somit von demselben Zugmittel 52 bewegt. Alternativ, aber gleichwertig, könnten auch ein Stetigförderer 50 mit separaten Zugmittel 52 mit Mitnehmer 53 eingesetzt werden, wobei jeweils ein Zugmittel 52 pro zugeordneten Parkgleislängsabschnitt(en) 40, 41 vorgesehen ist.

Der Reifenförderer 51 des Parkförderers 35 ist im Bereich des ersten Parkgleisbogenabschnittes 42 vorgesehen ist, um ein Seilbahnfahrzeug 5 entlang des Parkgleisbogenabschnittes 42 zu bewegen. Der Reifenförderer 51 weist eine Mehrzahl von in Förderrichtung R hintereinander angeordneten und angetriebenen Reifen 57 auf. Der Reifenförderer 35 ist eingerichtet, im Betrieb des Parkspeichers 30 mit den angetriebenen Reifen 57 ein Seilbahnfahrzeug 5 in Förderrichtung R mit einer Reifenfördergeschwindigkeit v_{R} entlang des ersten Parkgleisbogenabschnitts 42 zu bewegen.

Die Reifen 57 wirken zum Bewegen des Seilbahnfahrzeuges 5 beispielsweise in bekannter Weise mit einem Reibbelag 26 am Gehänge 20 des Seilbahnfahrzeuges 5 zusammen, beispielsweise wie in Fig.2 dargestellt.

Die Reifen 57 können einzeln angetrieben sein oder gruppenweise angetrieben sein oder alle gemeinsam angetrieben sein.

In der Ausführung nach Fig.3 ist ein Reifenantrieb 58, beispielsweise ein Elektromotor gegebenenfalls auch mit Getriebe, vorgesehen, der einen Reifen 57 des Reifenförderers 51 antreibt. An jedem Reifen 57 ist eine Doppelriemenscheibe 59 angeordnet. Jede Doppelriemenscheibe 59 (außer die jeweils letzte) ist mit jeweils einem Riemen, wie Keilriemen oder Zahnriemen, mit beiden benachbarten Reifen 57 mit Doppelriemenscheibe 59 verbunden (in Fig.3 aus Gründen der Übersichtlichkeit nicht dargestellt). Damit treibt der Reifenantrieb 58 alle Reifen 57 an. Durch Wahl der Riemenscheibendurchmesser können auch einfach Übersetzungen oder Untersetzungen in den Drehgeschwindigkeiten der Reifen 57, und damit auch unterschiedliche Reifenfördergeschwindigkeit v_{R} im Bereich der Reifen 57 des Reifenförderers 51, realisiert werden. Es ist aber ebenso denkbar, dass jeder Reifen 57 einzeln durch einen Reifenantrieb 58 angetrieben ist.

Um einen durchgehenden Antrieb durch den Parkförderer 35 sicherzustellen, überlappen sich der Stetigförderer 50 und der Reifenförderer 51 in einem ersten Überlappungsbereich 60 im Bereich des Übergangs vom ersten Parkgleislängsabschnitt 40 auf den Parkgleisbogenabschnitt 42 und in einem zweiten Überlappungsbereich 61 im Bereich des Übergangs vom Parkgleisbogenabschnitt 42 auf den zweiten Parkgleislängsabschnitt 41.

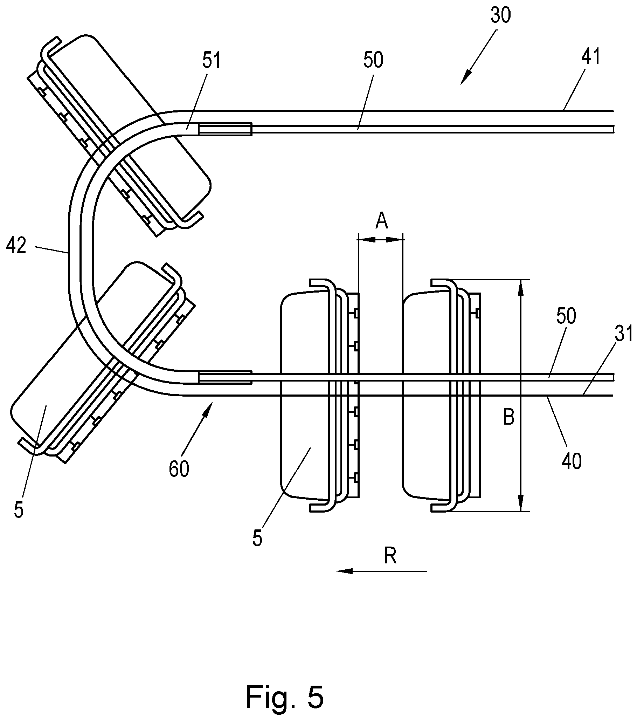

Das grundlegende Problem mit einem mäanderförmigen Parkgleis 31 wird anhand Fig.5 erläutert. Auf einem Parkgleislängsabschnitt 40, 41 können Seilbahnfahrzeuge 5 in Förderrichtung R sehr eng beabstandet bewegt werden. Der Abstand A in Förderrichtung R zwischen zwei benachbarten Seilbahnfahrzeugen 5 kann daher sehr klein gehalten werden, um die Baufläche des Parkspeichers 30 klein halten zu können. Aufgrund einer Breite B der Seilbahnfahrzeuge 5 quer zur Förderrichtung R lenken die Seilbahnfahrzeuge 5 im Parkgleisbogenabschnitt 42 aber aus, was bei einem kleinen Abstand A zur Kollision zwischen zwei benachbarten Seilbahnfahrzeugen 5 führen würde, was auf jeden Fall zu verhindern ist. Deshalb musste der Abstand A auch auf dem Parkgleislängsabschnitt 40 vor dem Parkgleisbogenabschnitt 42 bisher so groß gewählt sein, dass trotz des Auslenkens eine Kollision verhindert wird. Das führt aber unweigerlich zu einer größeren Baufläche des Parkspeichers 30.

Dieses Problem wird durch die Erfindung behoben. Hierzu ist erfindungsgemäß vorgesehen, dass beim Übergang vom ersten Parkgleislängsabschnitt 40 auf den ersten Parkgleisbogenabschnitt 42 die Reifenfördergeschwindigkeit v_{R} des Reifenförderers 51 im ersten Überlappungsbereich 60 ansteigt, um im Betrieb des Parkspeichers 30 ein Seilbahnfahrzeug 5 mit dem Reifenförderer 51 gegenüber der Stetigfördergeschwindigkeit v_{S} am Stetigförderer 50 zu beschleunigen. Die Reifenfördergeschwindigkeit v_{R} des ersten Reifens 57 im ersten Überlappungsbereich 60 entspricht vorteilhaft der Stetigfördergeschwindigkeit v_{S} des Stetigförderers 50 und steigt mit jedem folgenden Reifen 57 im ersten Überlappungsbereich 60 an. Gleichzeitig wird im ersten Überlappungsbereich, vorzugsweise am Beginn des ersten Überlappungsbereichs 60, der Eingriff des Mitnehmers 63 am Seilbahnfahrzeug 5 gelöst, sodass das Seilbahnfahrzeug 5 zumindest am Ende des ersten Überlappungsbereichs 60 nur vom Reifenförderer 51 angetrieben ist. Beim Übergang vom ersten Parkgleisbogenabschnitt 42 auf den zweiten Parkgleislängsabschnitt 41 wird die Reifenfördergeschwindigkeit v_{R} des Reifenförderers 51 im zweiten Überlappungsbereich 61 gesenkt, um im Betrieb des Parkspeichers 30 ein Seilbahnfahrzeug 5 mit dem Reifenförderer 51 zu verzögern. Die Reifenfördergeschwindigkeit v_{R} des letzten Reifens 57 im zweiten Überlappungsbereich 61 entspricht vorteilhaft der Stetigfördergeschwindigkeit v_{S} des Stetigförderers 50. Gleichzeitig wird ein Mitnehmer 53 am Zugmittel 52 des Stetigförderers 50 in Eingriff mit dem Seilbahnfahrzeug 5 gebracht, sodass das Seilbahnfahrzeug 5 zumindest am Ende des zweiten Überlappungsbereichs 61 nur vom Stetigförderer 51 bewegt wird.

Um den Eingriff des Mitnehmers 53 am Seilbahnfahrzeug 5 zu lösen, kann der Stetigförderer 51 am Beginn des ersten Überlappungsbereichs 60 quer zur Förderrichtung R und vom Seilbahnfahrzeug 5 weg versetzt werden, wie in Fig.3 dargestellt, sodass der Mitnehmer 53 alleine durch das seitliche Versetzung den Eingriff mit dem Seilbahnfahrzeug 5 verliert. Am zweiten Überlappungsbereich 61 kann genau umgekehrt vorgegangen werden, wie in Fig.3 dargestellt. Dabei wird der Stetigförderer 51 am Ende des zweiten Überlappungsbereichs 61 quer zur Förderrichtung R und zum Seilbahnfahrzeug 5 hin versetzt, sodass ein Mitnehmer 53 am Zugmittel 52 in Eingriff mit einem Teil des Seilbahnfahrzeuges 5 gelangt.

Durch das Beschleunigen eines Seilbahnfahrzeugs 5 im ersten Überlappungsbereich 60 gegenüber der Stetigfördergeschwindigkeit v_{S} des Zugmittels 52 wird der Abstand A zwischen zwei benachbarten Seilbahnfahrzeugen 5 am ersten Parkgleislängsabschnitt 40 vergrößert. Durch die Wahl der Beschleunigung und der erreichten Reifenfördergeschwindigkeit v_{R} am Ende des ersten Überlappungsbereichs 60 kann der Abstand A so vergrößert werden, dass eine Kollision der am Parkgleisbogenabschnitt 42 auslenkenden Seilbahnfahrzeuge 5 sicher vermieden wird.

Die Beschleunigung im ersten Überlappungsbereich 60 kann beispielsweise durch eine geeignete Wahl der Seilscheibendurchmesser der Doppelriemenscheiben 59 der Reifen 57 im Bereich des ersten Überlappungsbereich 60 realisiert werden, oder durch einzeln angetriebene Reifen 57 im ersten Überlappungsbereich 60.

Durch das Verzögern eines Seilbahnfahrzeuges 5 im zweiten Überlappungsbereich 61 kann die Geschwindigkeit des Seilbahnfahrzeuges 5 wieder an die Stetigfördergeschwindigkeit v_{S} angepasst werden, sodass das Seilbahnfahrzeug 5 möglichst ruckfrei weiterbewegt werden kann. Gleichzeitig wird damit der Abstand A zwischen zwei benachbarten Seilbahnfahrzeugen 5 wieder verringert, sodass die Seilbahnfahrzeuge 5 am zweiten Parkgleislängsabschnitt 41 wieder mit engem Abstand A bewegt werden können.

Auch das Verzögern im zweiten Überlappungsbereich 61 kann beispielsweise durch eine geeignete Wahl der Seilscheibendurchmesser der Doppelriemenscheiben 59 der Reifen 57 im Bereich des zweiten Überlappungsbereich 61 realisiert werden, oder durch einzeln angetriebene Reifen 57 im zweiten Überlappungsbereich 61.

Entlang des Parkgleisbogenabschnittes 42 zwischen dem ersten Überlappungsbereich 60 und dem zweiten Überlappungsbereich 61 kann eine konstante Reifenfördergeschwindigkeit v_{R} eingestellt sein.

Für einen möglichst sanften Übergang vom Parkgleisbogenabschnitt 42 auf den zweiten Parkgleislängsabschnitt 41 kann vorgesehen sein, dass eine Anzahl von Reifen 57 am Ende des zweiten Überlappungsbereiches 61 mit einer Rutschkupplung 49 ausgeführt ist. Die Rutschkupplung 49 dient dazu, dass ab einem Moment, an dem der Stetigförderer 51 auf das Seilbahnfahrzeug 5 wirkt, ein Reifen 57, der ebenso noch mit dem Seilbahnfahrzeug 5 zusammenwirkt, durchrutscht und keine Antriebskraft mehr auf das Seilbahnfahrzeug 5 ausübt. Damit kann sicher verhindert werden, dass gleichzeitig zwei Antriebe mit unterschiedlicher Fördergeschwindigkeit auf das Seilbahnfahrzeug 5 wirken.

Selbstverständlich können auch eine Anzahl von Reifen 57 am Beginn des ersten Überlappungsbereichs 60 mit einer solchen Rutschkupplung 49 ausgeführt sein. Das ermöglicht es insbesondere auch einen sanften Betrieb des Parkförderers 35 in beide möglichen Förderrichtungen zu realisieren.

Anstelle von Rutschkupplungen 49 an den Reifen 57 könnten eine Anzahl von Reifen 57 am Ende des zweiten Überlappungsbereichs 61 hinsichtlich der realisierten Reifenfördergeschwindigkeit v_{R} geregelt sein. Hierfür müssen diese Reifen 57 aber separat angetrieben sein. Auch damit kann ein sanfter Übergang am zweiten Überlappungsbereich 61 von der Reifenfördergeschwindigkeit v_{R} am Parkgleisbogenabschnitt 42 zur Stetigfördergeschwindigkeit v_{S} des Stetigförderers 50 durch das Regeln der Drehgeschwindigkeit dieser Reifen 57 realisiert werden. Das gilt analog auch wieder für Reifen 57 am Beginn des ersten Überlappungsbereichs 60. Auch eine Mischung wäre denkbar, also Rutschkupplungen 49 an Reifen 57 im zweiten Überlappungsbereich 61 und geregelte Reifen im ersten Überlappungsbereich 60, oder umgekehrt.

Ein Mitnehmer 53 ist vorzugsweise U-förmig mit zwei abstehenden Schenkeln 62, 63 ausgeführt ist, wodurch zwischen den Schenkeln 62, 63 in einer Mitnahmestellung der Schenkeln 62, 63 ein Eingriffsbereich 64 ausgebildet ist, in dem im Betrieb des Parkspeichers 30 ein Teil des Seilbahnfahrzeugs 5, beispielsweise ein Teil des Gehänges oder des Beförderungsmittels, zu liegen kommt, um den Mitnehmer 53 in Eingriff mit dem Seilbahnfahrzeug 5 zu bringen. Der Mitnehmer 53 kann aber beliebig anders ausgeführt sein, um den Eingriff zu realisieren. Beispielsweise könnte auch eine Kupplung realisiert sein, die für den Eingriff eingekuppelt wird und zum Lösen ausgekuppelt wird. Am Mitnehmer 53 und/oder am Seilbahnfahrzeug 5 können dazu auch mit eigenem Antrieb bewegte Teile vorgesehen sein.

An einem freien axialen Ende zumindest eines abstehenden Schenkels 62, 63 kann auch eine Rolle 65 drehbar gelagert angeordnet sein, wie in Fig.4 dargestellt. Durch die Rolle 65 kann das Eingreifen zwischen Mitnehmer 53 und Seilbahnfahrzeug 5 und das Lösen zwischen Mitnehmer 53 und Seilbahnfahrzeug 5 sanfter erfolgen, weil die Rolle 65 eines Schenkels 62, 63 am entsprechenden Teil des Seilbahnfahrzeugs einfach abrollt.

Das Eingreifen zwischen Mitnehmer 53 und Seilbahnfahrzeug 5 kann ebenso verbessert werden, wenn zumindest ein abstehender Schenkel 63 an einem dem axialen freien Ende gegenüberliegenden axialen Ende des Schenkels 63 drehbar gelagert angeordnet ist, sodass der Schenkel 63 insbesondere in Richtung des Eingriffsbereich 64 verschwenkt werden kann (in Fig.4 gestrichelt angedeutet). Hierbei kann am Mitnehmer 53 auch ein Federelement (nicht dargestellt) vorgesehen sein, das den drehbar gelagerten Schenkel 63 in die Mitnahmestellung drückt. Der drehbar gelagerte Schenkel 63 ist vorzugsweise der in Förderrichtung R hintere Schenkel des Mitnehmers 53. Ein solcher drehbar gelagerter Schenkel 63 ermöglicht die einfache und sichere Herstellung des Eingriffs zwischen Mitnehmer 53 und Seilbahnfahrzeug 5. Ein Teil des Seilbahnfahrzeuges 5, wie eine Gehängestange 28, der in Förderrichtung R im zweiten Überlappungsbereich 61 von hinten auf den Mitnehmer 53 trifft, klappt den Schenkel 63 um und der Teil des Seilbahnfahrzeugs 5 kann einfach in den Eingriffsbereich 64 gelangen. Sobald der Teil im Eingriffsbereich 64 ist, bewirkt das Federelement, dass sich der Schenkel 63 wieder zurück in eine Mitnahmestellung mit abstehendem Schenkel 63 bewegt. Der bewegte Schenkel 63 kann dann an einen Teil des Seilbahnfahrzeugs 5 anliegen und das Seilbahnfahrzeug 5 dadurch in Förderrichtung R mitenhmen.

In einem Parkspeicher 30 mit mehr als zwei Parkgleislängsabschnitten 40, 41, 43, 44, wie in Fig.3, werden vorzugsweise jeweils zwei benachbarte Parkgleislängsabschnitt 40, 41, 43, 44 durch einen Stetigförderer 51 mit einem Zugmittel 52 bedient. In jedem Parkgleisbogenabschnitt 42 zwischen diesen Parkgleislängsabschnitten 40 ist ein Reifenförderer 51 vorgesehen. Auch am weiteren Parkgleisbogenabschnitt 45, falls vorhanden, ist vorzugsweise ein Reifenförderer 51 vorgesehen. Es ist aber auch denkbar, dass nur ein erster Parkgleislängsabschnitt 40 und ein damit mit einem Parkgleisbogenabschnitt 42 verbundener zweiter Parkgleislängsabschnitt 41 mit einer erfindungsgemäßen Ausführung eines Parkförderers 35 ausgestattet sind und andere Parkgleislängsabschnitte und Parkgleisbogenabschnitte mit einer anderen Ausführung eines Parkförderers 35 ausgestattet sind.

Das Parkgleis 31 wird vorzugsweise durch zumindest eine Parkführungsschiene 36 gebildet, die ähnlich wie in Fig.2 dargestellt, mit zumindest einer Führungsrolle 21, 22 am Seilbahnfahrzeug 5 zusammenwirkt, um das Seilbahnfahrzeug 5 entlang des Parkgleises 36 zu führen. Die ohnehin für den Betrieb des Umlaufseilbahn 1 am Seilbahnfahrzeug 5 vorgesehenen Bauteile werden damit vorteilhaft auch für den Parkspeicher 30 genutzt.

## Patentansprüche

1. Parkspeicher für Seilbahnfahrzeuge (5) mit einem mäanderförmigen Parkgleis (31) zur Aufnahme von Seilbahnfahrzeugen (5), wobei das Parkgleis (31) zumindest einen ersten Parkgleislängsabschnitt (40) und einen zweiten Parkgleislängsabschnitt (41) aufweist, die beabstandet voneinander angeordnet sind, und der erste Parkgleislängsabschnitt (40) und der zweite Parkgleislängsabschnitt (41) über einen ersten Parkgleisbogenabschnitt (42) miteinander verbunden sind, wobei ein Seilbahnfahrzeug (5) mit einem Parkförderer (35) in einer Förderrichtung (R) entlang des Parkgleises (31) bewegbar ist, wobei im Parkspeicher (30) ein Stetigförderer (50) des Parkförderers (35) mit einem im Betrieb des Parkspeichers (30) in Förderrichtung (R) mit einer vorgegebenen Stetigfördergeschwindigkeit (v_{S}) umlaufenden Zugmittel (52) vorgesehen ist, und am Zugmittel (52) eine Mehrzahl von Mittnehmern (53) angeordnet ist und der Stetigförderer (50) eingerichtet ist, im Betrieb des Parkspeichers (30) mit einem Mitnehmern (53) das Seilbahnfahrzeug (5) in Förderrichtung (R) mit der Stetigfördergeschwindigkeit (v_{S}) entlang des ersten und zweiten Parkgleislängsabschnittes (40, 41) zu bewegen, **dadurch gekennzeichnet, dass** im Parkspeicher (30) im ersten Parkgleisbogenabschnitt (42) ein Reifenförderer (51) des Parkförderers (35) vorgesehen ist, wobei der Reifenförderer (51) eine Mehrzahl von in Förderrichtung (R) hintereinander angeordneten und angetriebenen Reifen (57) aufweist, und der Reifenförderer (51) eingerichtet ist, im Betrieb des Parkspeichers (30) mit den angetriebenen Reifen (57) das Seilbahnfahrzeug in Förderrichtung (R) mit einer Reifenfördergeschwindigkeit (v_{R}) entlang des ersten Parkgleisbogenabschnittes (42) zu bewegen, **dass** sich der Stetigförderer (50) und der Reifenförderer (51) in einem ersten Überlappungsbereich (60) im Bereich des Übergangs vom ersten Parkgleislängsabschnitt (40) auf den Parkgleisbogenabschnitt (42) und in einem zweiten Überlappungsbereich (61) im Bereich des Übergangs vom Parkgleisbogenabschnitt (42) auf den zweiten Parkgleislängsabschnitt (41) überlappen, **dass** beim Übergang vom ersten Parkgleislängsabschnitt (40) auf den ersten Parkgleisbogenabschnitt (42) die Reifenfördergeschwindigkeit (v_{R}) des Reifenförderers (51) im ersten Überlappungsbereich (60) ansteigt, um im Betrieb des Parkspeichers (30) das Seilbahnfahrzeug (5) mit dem Reifenförderer (51) zu beschleunigen und sich gleichzeitig der Eingriff des Mitnehmers (53) am Seilbahnfahrzeug (5) löst, **und dass** beim Übergang vom ersten Parkgleisbogenabschnitt (42) auf den zweiten Parkgleislängsabschnitt (41) die Reifenfördergeschwindigkeit (v_{R}) des Reifenförderers (51) im zweiten Überlappungsbereich (61) sinkt, um im Betrieb des Parkspeichers (30) das Seilbahnfahrzeug (5) mit dem Reifenförderer (51) zu verzögern und gleichzeitig einer der Mitnehmer (53) am Zugmittel (52) des Stetigförderers (51) in Eingriff mit dem Seilbahnfahrzeug (5) gelangt.

2. Parkspeicher nach Anspruch 1, **dadurch gekennzeichnet, dass** für den ersten Parkgleislängsabschnitt (40) und den zweiten Parkgleislängsabschnitt (41) ein Stetigförderer (50) mit jeweils eigenem Zugmittel (52) für den ersten Parkgleislängsabschnitt (40) und den zweiten Parkgleislängsabschnitt (41) vorgesehen ist oder für den ersten Parkgleislängsabschnitt (40) und den zweiten Parkgleislängsabschnitt (41) ein Stetigförderer (50) mit demselben Zugmittel (52) für den für den ersten Parkgleislängsabschnitt (40) und den zweiten Parkgleislängsabschnitt (41) vorgesehen ist.

3. Parkspeicher nach Anspruch 1 oder 2, **dadurch gekennzeichnet, dass** zumindest ein Reifen (57) des Reifenförderers (51) im zweiten Überlappungsbereich über eine Rutschkupplung (49) angetrieben ist und/oder zumindest ein Reifen (57) des Reifenförderers (51) im ersten Überlappungsbereich (60) über eine Rutschkupplung (49) angetrieben ist.

4. Parkspeicher nach einem der Ansprüche 1 bis 3, **dadurch gekennzeichnet, dass** der Mitnehmer (53) U-förmig mit zwei abstehenden Schenkeln (62, 63) ausgeführt ist, wodurch zwischen den Schenkeln (62, 63) in einer Mitnahmestellung ein Eingriffsbereich (64) ausgebildet ist und im Eingriffsbereich (64) im Betrieb des Parkspeichers (30) ein Teil des Seilbahnfahrzeugs (5) zu liegen kommt, um den Mitnehmer (53) in Eingriff mit dem Seilbahnfahrzeug (5) zu bringen.

5. Parkspeicher nach Anspruch 4, **dadurch gekennzeichnet, dass** am freien axialen Ende zumindest eines abstehenden Schenkels (62, 63) eine Rolle (65) drehbar gelagert angeordnet ist.

6. Parkspeicher nach Anspruch 4 oder 5, **dadurch gekennzeichnet, dass** zumindest ein abstehender Schenkel (62, 63) an einem dem axialen freien Ende gegenüberliegenden Ende des Schenkels (62, 63) drehbar gelagert angeordnet ist, wobei am Mitnehmer (53) ein Federelement vorgesehen ist, das den drehbar gelagerten Schenkel (62, 63) in der Mitnahmestellung hält.

7. Verfahren zum Speichern eines Seilbahnfahrzeugs (5) in einem Parkspeicher (30) für Seilbahnfahrzeuge (5) mit einem mäanderförmigen Parkgleis (31) zur Aufnahme von Seilbahnfahrzeugen (5), wobei das Seilbahnfahrzeug (5) zum Speichern mit einem Parkförderer (35) in einer Förderrichtung (R) entlang des Parkgleises (31) mit zumindest einem ersten Parkgleislängsabschnitt (40) und einem zweiten Parkgleislängsabschnitt (41), die über einen ersten Parkgleisbogenabschnitt (42) miteinander verbunden sind, bewegt wird, wobei das Seilbahnfahrzeug (5) entlang des ersten Parkgleislängsabschnittes (40) und des zweiten Parkgleislängsabschnittes (41) mit einem Stetigförderer (50) des Parkförderers (35) mit einem mit einer Stetigfördergeschwindigkeit (v_{S}) umlaufenden Zugmittel (52) bewegt wird, indem ein Mitnehmer (53) am Zugmittel (52) in Eingriff mit dem Seilbahnfahrzeug (5) gebracht wird und der Mitnehmer (53) das Seilbahnfahrzeug (5) in Förderrichtung (R) mitnimmt, **dadurch gekennzeichnet, dass** das Seilbahnfahrzeug (5) in Förderrichtung (R) entlang des ersten Parkgleisbogenabschnittes (42) mit einem Reifenförderer (51) des Parkförderers (35) mit einer Mehrzahl von in Förderrichtung (R) hintereinander angeordneten und angetriebenen Reifen (57) mit einer Reifenfördergeschwindigkeit (v_{R}) bewegt wird, dass das Seilbahnfahrzeug (5) beim Übergang vom ersten Parkgleislängsabschnitt (40) auf den ersten Parkgleisbogenabschnitt (41) die Reifenfördergeschwindigkeit (v_{R}) des Reifenförderers (51) in einem ersten Überlappungsbereich (60) im Bereich des Übergangs zwischen dem ersten Parkgleislängsabschnitt (40) und den ersten Parkgleisbogenabschnitt (42) erhöht wird und das Seilbahnfahrzeug (5) gegenüber der Stetigfördergeschwindigkeit (v_{S}) beschleunigt wird und gleichzeitig der Eingriff des Mitnehmers (53) am Seilbahnfahrzeug (5) gelöst wird, **und dass** das Seilbahnfahrzeug (5) beim Übergang vom ersten Parkgleisbogenabschnitt (42) auf den zweiten Parkgleislängsabschnitt (41) die Reifenfördergeschwindigkeit (v_{R}) des Reifenförderers (52) in einem zweiten Überlappungsbereich (61) im Bereich des Übergangs zwischen dem ersten Parkgleisbogenabschnitt (42) und den zweiten Parkgleislängsabschnitt (41) verringert wird und das Seilbahnfahrzeug (5) verzögert wird und gleichzeitig einer der Mitnehmer (53) am Zugmittel (52) des Stetigförderers (50) in Eingriff mit dem Seilbahnfahrzeug (5) gebracht wird.

8. Verfahren nach Anspruch 7, **dadurch gekennzeichnet, dass** das Seilbahnfahrzeug (5) im ersten Parkgleislängsabschnitt (40) und im zweiten Parkgleislängsabschnitt (41) mit jeweils einem Stetigförderer (50) mit eigenem Zugmittel (52) für den ersten Parkgleislängsabschnitt (40) und den zweiten Parkgleislängsabschnitt (41) bewegt wird oder das Seilbahnfahrzeug (5) im ersten Parkgleislängsabschnitt (40) und im zweiten Parkgleislängsabschnitt (41) mit einem Stetigförderer (50) mit demselben Zugmittel (52) für den für den ersten Parkgleislängsabschnitt (40) und den zweiten Parkgleislängsabschnitt (41) bewegt wird.

9. Verfahren nach Anspruch 7 oder 8, **dadurch gekennzeichnet, dass** die Reifenfördergeschwindigkeit (v_{R}) nach dem ersten Überlappungsbereich (60) bis zum zweiten Überlappungsbereich (61) gleich gehalten wird.

## Claims

1. A parking storage facility for cableway vehicles (5) with a meander-shaped parking track (31) for accommodating cableway vehicles (5), wherein the parking track (31) has at least a first longitudinal parking track section (40) and a second longitudinal parking track section (41) which are arranged at a distance from one another and wherein the first longitudinal parking track section (40) and the second longitudinal parking track section (41) are connected to each other via a first parking track curve section (42), wherein a cableway vehicle (5) can be moved along the parking track (31) in a conveying direction (R) by means of a parking conveyor (35), wherein a continuous conveyor (50) of the parking conveyor (35) is provided in the parking storage facility (30) with a traction means (52) circulating in the conveying direction (R) at a given continuous conveying speed (v_{S}) during operation of the parking storage facility (30), and a plurality of pusher dogs (53) is arranged on the traction means (52), and the continuous conveyor (50) is configured to move the cableway vehicle (5) in the conveying direction (R) with a pusher dog (53) and at the continuous conveying speed (v_{S}) along the first and second longitudinal parking track sections (40, 41) during operation of the parking storage facility (30), **characterized in that** a tire conveyor (51) of the parking conveyor (35) is provided in the parking storage facility (30) in the first parking track curve section (42), wherein the tire conveyor (51) has a plurality of driven tires (57) arranged one behind the other in the conveying direction (R) and wherein the tire conveyor (51) is configured to move the cableway vehicle in the conveying direction (R) with the driven tires (57) and at a tire conveying speed (v_{R}) along the first parking track curve section (42) during operation of the parking storage facility (30), **in that** the continuous conveyor (50) and the tire conveyor (51) overlap in a first overlap region (60) in the region of the transition from the first longitudinal parking track section (40) to the parking track curve section (42) and in a second overlap region (61) in the region of the transition from the parking track curve section (42) to the second longitudinal parking track section (41), **in that** during transition from the first longitudinal parking track section (40) to the first parking track curve section (42), the tire conveying speed (v_{R}) of the tire conveyor (51) increases in the first overlap region (60) in order to accelerate the cableway vehicle (5) with the tire conveyor (51) during operation of the parking storage facility (30) and, at the same time, engagement of the pusher dog (53) with the cableway vehicle (5) is released, **and in that** during transition from the first parking track curve section (42) to the second longitudinal parking track section (41), the tire conveying speed (v_{R}) of the tire conveyor (51) decreases in the second overlap region (61) in order to decelerate the cableway vehicle (5) with the tire conveyor (51) during operation of the parking storage facility (30) and, at the same time, one of the pusher dogs (53) on the traction means (52) of the continuous conveyor (51) comes into engagement with the cableway vehicle (5).

2. The parking storage facility according to claim 1, **characterized in that** a continuous conveyor (50) is provided for the first longitudinal parking track section (40) and the second longitudinal parking track section (41), each having its own traction means (52) for the first longitudinal parking track section (40) and the second longitudinal parking track section (41) or a continuous conveyor (50) with the same traction means (52) for the first longitudinal parking track section (40) and the second longitudinal parking track section (41) is provided for the first longitudinal parking track section (40) and the second longitudinal parking track section (41).

3. The parking storage facility according to either claim 1 or claim 2, **characterized in that** at least one tire (57) of the tire conveyor (51) in the second overlap region is driven via a slip clutch (49) and/or at least one tire (57) of the tire conveyor (51) in the first overlap region (60) is driven via a slip clutch (49).

4. The parking storage facility according to any of claims 1 to 3, **characterized in that** the pusher dog (53) is U-shaped with two protruding legs (62, 63), whereby an engagement region (64) is formed between the legs (62, 63) in an entrainment position and a portion of the cableway vehicle (5) comes to rest in the engagement region (64) during operation of the parking storage facility (30) in order to bring the pusher dog (53) into engagement with the cableway vehicle (5).

5. The parking storage facility according to claim 4, **characterized in that** a roller (65) is rotatably mounted at the free axial end of at least one protruding leg (62, 63).

6. The parking storage facility according to claim 4 or 5, **characterized in that** at least one protruding leg (62, 63) is rotatably mounted on an end of the leg (62, 63) opposite the axial free end, wherein a spring element is provided on the pusher dog (53) which holds the rotatably mounted leg (62, 63) in the entrainment position.

7. A method for storing a cableway vehicle (5) in a parking storage facility (30) for cableway vehicles (5) with a meander-shaped parking track (31) for accommodating cableway vehicles (5), wherein, for storing, the cableway vehicle (5) is moved with a parking conveyor (35) in a conveying direction (R) along the parking track (31) with at least a first longitudinal parking track section (40) and a second longitudinal parking track section (41), which are connected to each other via a first parking track curve section (42), wherein the cableway vehicle (5) is moved along the first longitudinal parking track section (40) and the second longitudinal parking track section (41) by a continuous conveyor (50) of the parking conveyor (35) with a traction means (52) circulating at a continuous conveying speed (v_{S}) in that a pusher dog (53) on the traction means (52) is brought into engagement with the cableway vehicle (5) and the pusher dog (53) entrains the cableway vehicle (5) in the conveying direction (R), **characterized in that** the cableway vehicle (5) is moved in the conveying direction (R) along the first parking track curve section (42) with a tire conveyor (51) of the parking conveyor (35) with a plurality of driven tires (57) arranged one behind the other in the conveying direction (R) and driven at a tire conveying speed (v_{R}), **in that** during transition from the first longitudinal parking track section (40) to the first parking track curve section (41), the tire conveying speed (v_{R}) of the tire conveyor (51) is increased in a first overlap region (60) in the region of the transition between the first longitudinal parking track section (40) and the first parking track curve section (42) and the cableway vehicle (5) is accelerated relative to the continuous conveying speed (v_{S}) and, at the same time, the engagement of the pusher dog (53) on the cableway vehicle (5) is released, **and in that** during the transition from the first parking track curve section (42) to the second parking track longitudinal section (41), the tire conveying speed (v_{R}) of the tire conveyor (52) is reduced in a second overlap region (61) in the region of the transition between the first parking track curve section (42) and the second parking track longitudinal section (41) and the cableway vehicle (5) is decelerated and, at the same time, one of the pusher dogs (53) on the traction means (52) of the continuous conveyor (50) is brought into engagement with the cableway vehicle (5).

8. The method according to claim 7, **characterized in that** the cableway vehicle (5) is moved in the first longitudinal parking track section (40) and in the second longitudinal parking track section (41) in each case by a continuous conveyor (50) with its own traction means (52) for the first longitudinal parking track section (40) and the second longitudinal parking track section (41), or the cableway vehicle (5) is moved in the first longitudinal parking track section (40) and in the second longitudinal parking track section (41) by a continuous conveyor (50) with the same traction means (52) for the first longitudinal parking track section (40) and the second longitudinal parking track section (41).

9. The method according to claim 7 or 8, **characterized in that** the tire conveying speed (v_{R}) is kept constant after the first overlap region (60) up to the second overlap region (61).

## Revendications

1. Stockage de stationnement pour véhicules de téléphérique (5) comportant une voie de stationnement (31) en forme de méandres pour recevoir des véhicules de téléphérique (5), dans lequel la voie de stationnement (31) présente au moins une première section longitudinale de voie de stationnement (40) et une seconde section longitudinale de voie de stationnement (41) qui sont agencées à distance l'une de l'autre, et la première section longitudinale de voie de stationnement (40) et la seconde section longitudinale de voie de stationnement (41) sont reliées entre elles par l'intermédiaire d'une première section courbe de voie de stationnement (42), dans lequel un véhicule de téléphérique (5) peut être déplacé avec un transporteur de stationnement (35) dans une direction de transport (R) le long de la voie de stationnement (31), dans lequel un transporteur continu (50) du transporteur de stationnement (35) est prévu dans le stockage de stationnement (30) avec un moyen de traction (52) circulant dans la direction de transport (R) à une vitesse de transporteur continu (v_{S}) prédéfinie pendant le fonctionnement du stockage de stationnement (30), et une pluralité d'entraîneurs (53) est agencée sur le moyen de traction (52) et le transporteur continu (50) est conçu pour, lors du fonctionnement du stockage de stationnement (30), déplacer le véhicule de téléphérique (5) dans la direction de transport (R) à la vitesse de transporteur continu (v_{S}) avec un entraîneur (53) le long de la première et de la seconde section longitudinale de voie de stationnement (40, 41), **caractérisé en ce qu'**un transporteur à pneus (51) du transporteur de stationnement (35) est prévu dans le stockage de stationnement (30) dans la première section courbe de voie de stationnement (42), dans lequel le transporteur à pneus (51) présente une pluralité de pneus (57) agencés les uns derrière les autres dans la direction de transport (R) et entraînés, et le transporteur à pneus (51) est conçu pour déplacer le véhicule de téléphérique dans la direction de transport (R) avec une vitesse de transport de pneus (v_{R}) le long de la première section courbe de voie de stationnement (42) lors du fonctionnement du stockage de stationnement (30) avec les pneus (57) entraînés, **en ce que** le transporteur continu (50) et le transporteur à pneus (51) se chevauchent dans une première zone de chevauchement (60) dans la zone de la transition de la première section longitudinale de voie de stationnement (40) à la section courbe de voie de stationnement (42) et dans une seconde zone de chevauchement (61) dans la zone de la transition de la section courbe de voie de stationnement (42) à la seconde section longitudinale de voie de stationnement (41), **en ce que,** lors de la transition de la première section longitudinale de voie de stationnement (40) à la première section courbe de voie de stationnement (42), la vitesse de transport de pneus (v_{R}) du transporteur à pneus (51) augmente dans la première zone de chevauchement (60), pour accélérer, lors du fonctionnement du stockage de stationnement (30), le véhicule de téléphérique (5) avec le transporteur à pneus (51) et, en même temps, la mise en prise de l'entraîneur (53) sur le véhicule de téléphérique (5) se libère, **et en ce que,** lors de la transition de la première section courbe de voie de stationnement (42) à la seconde section longitudinale de voie de stationnement (41), la vitesse de transport de pneus (v_{R}) du transporteur à pneus (51) diminue dans la seconde zone de chevauchement (61), afin de ralentir le véhicule de téléphérique (5) avec le transporteur à pneus (51) pendant le fonctionnement du stockage de stationnement (30) et, en même temps, l'un des entraîneurs (53) sur le moyen de traction (52) du transporteur continu (51) vient en prise avec le véhicule de téléphérique (5).

2. Stockage de stationnement selon la revendication 1, **caractérisé en ce qu'**il est prévu, pour la première section longitudinale de voie de stationnement (40) et la seconde section longitudinale de voie de stationnement (41), un transporteur continu (50) comportant respectivement un moyen de traction (52) propre pour la première section longitudinale de voie de stationnement (40) et la seconde section longitudinale de voie de stationnement (41) ou pour la première section longitudinale de voie de stationnement (40) et la seconde section longitudinale de voie de stationnement (41), un transporteur continu (50) avec le même moyen de traction (52) est prévu pour la première section longitudinale de la voie de stationnement (40) et la seconde section longitudinale de la voie de stationnement (41).

3. Stockage de stationnement selon la revendication 1 ou 2, **caractérisé en ce qu'**au moins un pneu (57) du transporteur à pneus (51) est entraîné dans la seconde zone de chevauchement par l'intermédiaire d'un accouplement à glissement (49) et/ou au moins un pneu (57) du transporteur à pneus (51) est entraîné dans la première zone de chevauchement (60) par l'intermédiaire d'un accouplement à glissement (49).

4. Stockage de stationnement selon l'une des revendications 1 à 3, **caractérisé en ce que** l'entraîneur (53) est réalisé en forme de U comportant deux branches (62, 63) en saillie, ce qui permet de former une zone de mise en prise (64) entre les branches (62, 63) dans une position d'entraînement et de placer une partie du véhicule de téléphérique (5) dans la zone de mise en prise (64) lorsque l'accumulateur de stationnement (30) est en fonctionnement, afin d'amener l'entraîneur (53) en prise avec le véhicule de téléphérique (5).

5. Stockage de stationnement selon la revendication 4, **caractérisé en ce qu'**un galet (65) est agencé de manière rotative à l'extrémité axiale libre d'au moins une branche (62, 63) en saillie.

6. Stockage de stationnement selon la revendication 4 ou 5, **caractérisé en ce qu'**au moins une branche (62, 63) en saillie est agencée de manière rotative sur une extrémité de la branche (62, 63) opposée à l'extrémité libre axiale, dans lequel un élément ressort est prévu sur l'entraîneur (53), lequel maintient la branche (62, 63) montée de manière rotative dans la position d'entraînement.

7. Procédé pour stocker un véhicule de téléphérique (5) dans un stockage de stationnement (30) pour véhicules de téléphérique (5) comportant une voie de stationnement (31) en forme de méandres pour recevoir des véhicules de téléphérique (5), dans lequel le véhicule de téléphérique (5) est déplacé pour être stocké avec un transporteur de stationnement (35) dans une direction de transport (R) le long de la voie de stationnement (31) comportant au moins une première section longitudinale de voie de stationnement (40) et une seconde section longitudinale de voie de stationnement (41), qui sont reliées l'une à l'autre par une première section courbe de voie de stationnement (42), dans lequel le véhicule de téléphérique (5) est déplacé le long de la première section longitudinale de voie de stationnement (40) et de la seconde section longitudinale de voie de stationnement (41) avec un transporteur continu (50) du transporteur de stationnement (35) comportant un moyen de traction (52) circulant à une vitesse de convoyeur continu (v_{S}), en amenant un entraîneur (53) sur le moyen de traction (52) en prise avec le véhicule de téléphérique (5) et en entraînant l'entraîneur (53) avec le véhicule de téléphérique (5) dans la direction de transport (R), **caractérisé en ce que** le véhicule de téléphérique (5) est déplacé dans la direction de transport (R) le long de la première section courbe de voie de stationnement (42) avec un transporteur à pneus (51) du transporteur de stationnement (35) comportant une pluralité de pneus (57) agencés les uns derrière les autres dans la direction de transport (R) et entraînés à une vitesse de transport de pneus (v_{R}), **en ce que** le véhicule de téléphérique (5), lors de la transition de la première section longitudinale de voie de stationnement (40) à la première section courbe de voie de stationnement (41), augmente la vitesse de transport de pneus (v_{R}) du transporteur à pneus (51) dans une première zone de chevauchement (60) dans la zone de la transition entre la première section longitudinale de voie de stationnement (40) et la première section courbe de voie de stationnement (42) et le véhicule de téléphérique (5) est accéléré par rapport à la vitesse de transporteur continu (v_{S}) et, en même temps, la mise en prise de l'entraîneur (53) sur le véhicule de téléphérique (5) est libérée, **et en ce que** le véhicule de téléphérique (5), lors de la transition de la première section courbe de voie de stationnement (42) à la seconde section longitudinale de voie de stationnement (41), la vitesse de transport de pneus (v_{R}) du transporteur à pneus (52) dans une seconde zone de chevauchement (61) dans la zone de la transition de la première section courbe de voie de stationnement (42) à la seconde section longitudinale de voie de stationnement (41) est réduite et le véhicule de téléphérique (5) est ralenti et, en même temps, l'un des entraîneurs (53) sur le moyen de traction (52) du transporteur continu (50) est amené en prise avec le véhicule de téléphérique (5).

8. Procédé selon la revendication 7, **caractérisé en ce que** le véhicule de téléphérique (5) est déplacé dans la première section longitudinale de voie de stationnement (40) et dans la seconde section longitudinale de voie de stationnement (41) avec respectivement un transporteur continu (50) comportant son propre moyen de traction (52) pour la première section longitudinale de voie de stationnement (40) et la seconde section longitudinale de voie de stationnement (41) ou le véhicule de téléphérique (5) est déplacé dans la première section longitudinale de voie de stationnement (40) et dans la seconde section longitudinale de voie de stationnement (41) avec un transporteur continu (50) comportant le même moyen de traction (52) pour la première section longitudinale de voie de stationnement (40) et la seconde section longitudinale de voie de stationnement (41).

9. Procédé selon la revendication 7 ou 8, **caractérisé en ce que** la vitesse de transport de pneus (v_{R}) est maintenue constante après la première zone de chevauchement (60) jusqu'à la seconde zone de chevauchement (61).
